# EUROPEAN PATENT APPLICATION

(11) **EP 4 105 000 A1**
(43) Date of publication of application: **21.12.2022**
(21) Application number: 21179231.2
(22) Date of filing: 14.06.2021
(51) Int. Cl.: B29C 48/11, B29C 48/08, B29C 48/25, B29C 48/30, B29C 48/10, B29C 48/265

(54) **GUIDING UNIT, POLYMER EXTRUSION DIE, EXTRUSION SYSTEM AND METHOD OF MANUFACTURING THE GUIDING UNIT**

(71) Applicant: Agripak S.r.l., 20127 Milano (IT)
(72) Inventor: Terragni, Massimo, 20145 Milano (IT)
(74) Representative: Müller Schupfner & Partner Patent- und Rechtsanwaltspartnerschaft mbB

(57) **Abstract**

A guiding unit (1) for a polymer extrusion die (10) for creating an extruded product from molten material is provided, wherein the extruded product has a plurality of hollow channels and is extruded in an extrusion direction (d1). The guiding unit (1) comprises a main body (2) having a mounting portion (3) for mounting the guiding unit (1) inside the die (10), and a plurality of forming elements (4) each comprising a forming section (5) and a mounting section (6), wherein the forming elements (4) are mounted or mountable via the mounting sections (6) to the main body (2). In the mounted state the forming sections (6) protrude from the main body (2) and each forming section (6) has an outer geometrical configuration substantially corresponding to the inner cross-sectional shape of the channels of the extruded product. Further, the forming elements (4) and the main body (2) are separate elements such that the forming elements (4) are demountable from the main body (2). Further, a polymer extrusion die, an extrusion system and a method of manufacturing the guiding unit is provided.

## Description

The present invention relates to a guiding unit for use in a polymer extrusion die for creating a sheet having a plurality of hollow channels, to a polymer extrusion die for creating a sheet having a plurality of hollow channels, to an extrusion system and to a method of manufacturing the guiding unit.

Sheets having a plurality of hollow channels are used in different applications. For example, the sheets are used as layer pads between layers of articles (e.g. during transporting of articles). In order to improve mechanical properties and handling of such sheets, the sheets may be provided with hollow channels (e.g. for reducing weight and improving resistivity). Such sheets may be manufactured by an extrusion method using an extrusion die (also referred to as a Tdie or a flat die head). Within such extrusion die a guiding unit (also referred to as a male of the die) is positioned for guiding the molten material and defining the hollow channels using teeth. The guiding unit is integrally manufactured from a blank using a traditional side milling cutter that cuts the teeth in rectangular, triangular or X shapes according to a layout of the finished product. Each guiding unit is individually characterized by its teeth design. If another layout of the sheet should be manufactured or a range of thicknesses of the sheet should be changed, the whole guiding unit has to be exchanged. That is, the guiding unit has to be completely exchanged in case another pattern of the hollow channels is desired. In addition, if there is a damage at the guiding unit (e.g. at the teeth), the whole guiding unit is affected. Thus, the effort for maintenance is high.

Therefore, it is an object of the present invention to provide a guiding unit, a polymer extrusion die, an extrusion system and a method of manufacturing the guiding unit being easily adjustable to different teeth designs. It is a further object of the present invention to facilitate the manufacturing and the maintenance of the guiding unit.

The above problem is solved by a guiding unit having the features of claim 1, by a polymer extrusion die having the features of claim 13, by an extrusion system having the features of claim 14 and by a method of manufacturing the guiding unit having the features of claim 15.

According to an aspect of the present invention a guiding unit for a polymer extrusion die for creating an extruded product from molten material is provided, wherein the extruded product has a plurality of hollow channels and is extruded in an extrusion direction. Preferably, the guiding unit comprises a main body having a mounting portion for mounting the guiding unit inside the die. In addition, the guiding unit may comprise a plurality of forming elements each comprising a forming section and a mounting section, wherein the forming elements are mounted or mountable via the mounting sections to the main body. Further, in the mounted state the forming sections may protrude from the main body. Each forming section may have an outer geometrical configuration substantially corresponding to the inner cross-sectional shape of the channels of the extruded product. Moreover, the forming elements and the main body may be separate elements such that the forming elements are demountable from the main body.

The guiding unit may be provided and used within an extrusion die for guiding and distributing the molten material (e.g. thermoplastic) into a top layer, a bottom layer and vertical ribs connection said layers, forming the extruded product. The guiding unit may be the only element within the extrusion die that together with the die lips and the die may form a passage for the molten material so as to guide the molten material. Accordingly, by using the guiding unit together with the extrusion die, a corrugated layer pad may be extruded. In other words, the shape and configuration of the layer pad may depend on the configuration of the guiding unit. In particular, the shape of the ribs connecting the top layer and the bottom layer of the extruded product may be formed and shaped by the guiding unit. In particular, the forming section of the forming elements may be responsible for defining the configuration of the cross section of the extruded product. For example, the forming elements may define the shape of the channels provided within the extruded product. In addition, the forming elements may be individually separatable from the guiding unit. Accordingly, the guiding unit may be remodeled so as to be able to manufacture differently configured extruded products. Accordingly, only a part of the guiding unit has to be changed so as to be in a position to manufacture different products. In addition, in case of maintenance, the forming elements may be separately demounted from the guiding unit. Then, each forming element or some of the forming elements may be maintained, repaired or treated otherwise. Therefore, not the whole main body has to be handled (e.g. shipped). As a result, the maintenance may be much easier and thus more effective. As a result, only a tip part of the guiding unit (e.g. the forming elements) may be exchanged to provide a differently characterized guiding unit. For example, extruded products having a thickness range of between 2 mm to 25 mm may be manufactured with only one extrusion die by only changing the forming elements (i.e. providing a different thickness of the forming element in the thickness direction). Consequently, the research and development of new extruded products may be simplified or may even made possible.

In the following, directions are defined which may be applied throughout the following description. The extrusion direction may be the direction in which the extruded product leaves the extrusion die. Further, the molten material may be supplied to the extrusion die in a supply direction. The supply direction may be the same direction as the extrusion direction. Therefore, within the extrusion die, there is no substantial redirection of the molten material necessary. Thus, the extrusion process may be executed in an efficient manner. Further, the extrusion direction may be parallel to the horizontal. In addition, a width direction may be perpendicular to the extrusion direction and parallel to the horizontal. Further, the width direction may correspond to the width of the extruded product. For example, if a sheet is extruded, the width direction may be the length of one edge of the sheet. Moreover, a height direction may be perpendicular to the width direction and to the extrusion direction. That is the thickness of the extruded product being extruded may extend in the height direction. All definitions of directions may be defined in an operational state of the extrusion die. Moreover, an upstream side and a downstream side may be defined with respect to a flow direction of the molten material in operation of the guiding unit.

The main body of the male of the die may have a substantially triangular shape in a cross section defined by the extrusion direction and the height direction. The main body may be passed by molten material from an upstream side to a downstream side of the guiding unit. The thinnest part of the main body in the height direction may be at the downstream side. The main body may be made of metal. Further, the main body may be an integral element. Accordingly, the main body may not have to be assembled and thus the main body may have a smooth surface exposed to the molten material (e.g. no gaps and/or edges). Further, the main body may define a flow passage for the molten material between the surface of the main body exposed to the molten material and the die in which the main body may be accommodated. Therefore, the main body may be configured to guide the molten material towards the outlet of the die. Further, the main body may be large as compared to the forming elements. In addition, the main body may have at least the same length as the extruded product in the width direction. For example, the main body may have a length of 3500 mm in the width direction.

The main body may be integral part of the extrusion die or may be held within the die via a mounting portion. The mounting portion may be a protrusion configured to be positioned within a corresponding recess of the die. Accordingly, the main body may be demounted from the die and may be implemented in different dies. The mounting portion may define the position of the main body within the die. Therefore, by fitting the mounting portion of the main body to the recess of the die, the guiding unit may be accurately positioned within the die so as to define the flow passages in highly precise manner. In particular, the main body may define an upper flow passage and a lower flow passage between the guiding element and the die lips in a cross section defined by the extrusion direction and the height direction. Further, the guiding unit may be positioned within the die formed inter alia by the die lips such that both flow passages may have the same width in the height direction. Once accurately positioned within the die, the main body of the male of the die (i.e. the guiding unit) may be fixed to the die by screwing, for example. In addition or alternatively, the mounting portion may be configured to be engaged with the recess of the die. Accordingly, a proper fixation of the main body to the die may be ensured.

The forming elements may be also referred to as fingers or teeth. The forming elements may be provided at the main body at the downstream side of the main body. The forming elements may form frontal inserts of the main body. The forming elements may be provided at the main body throughout the extension of the main body in the width direction. In addition, the forming elements may be separatable from the main body such that the forming elements may be detached from the main body. Accordingly, the forming elements may be easily exchanged by other forming elements having a different shape, for example. In addition, the forming elements may be separatable from each other. That is, individual forming elements may be easily exchanged or demounted for external maintenance or repair, for example. The forming elements may be provided side by side at the main body in the width direction. Between adjacent forming elements there may be provided a gap. In particular, between the forming sections of adjacent forming elements. The gap may define the ribs of the extruded product. Further, between adjacent forming elements a spacer may be provided such that the gap between adjacent forming elements may be defined by the spacer. Therefore, the dimension of the rib in the width direction may be defined. Accordingly, the configuration of the extruded product may be defined by the attaching the forming elements and/or spacer in a specific pattern at the main body.

Especially, the forming sections of the forming elements may be responsible for the channels provided within the extruded product. That is, if the forming section has a circular shape (i.e. the forming section may have a cylindrical shape) in a cross-section perpendicular to the extrusion direction, the channel formed by said forming section within the extruded product may have a circular cross section, too. That is, the forming section may have a shape that may be the counter piece of the shape of the hollow channel within the extruded product. Further, the forming section may have a polygonal cross-sectional shape (e.g. a rectangular, triangular, hexagonal etc.) in the cross-section perpendicular to the extrusion direction. Moreover, each forming section may have a constant shape (e.g. a constant thickness) along the extrusion direction. Accordingly, the molten material may be sufficiently pushed in the desired shape by passing the forming section.

Further, all forming sections of the forming elements provided at the main body may have the same shape. Accordingly, a homogeneous extruded product may be manufactured. Alternatively, some of the forming sections of the forming elements may have different shapes. For example, some forming sections may have a circular cross-sectional shape, wherein some other forming sections may have a polygonal cross-sectional shape. Accordingly, the extruded product may have differently shaped channels. Thus, extruded products may be manufactured having specific properties depending on the use of the extruded product. The forming elements may be easily arranged at the main body so as to form a specific pattern of differently shaped forming sections. That is, during changing or rearranging of the forming elements, the main body may remain at the die. Accordingly, the adaption or rearrangement of the forming elements may be easily done. As a result, different extruded products may be manufactured by solely exchanging some of the forming elements or all forming elements without the need for substantial adjustments of the extrusion system. In other words, the main body and the forming elements may be separate parts. For example, the main body has not to be demounted from the die to adjust or to exchange forming elements. Thus, the variability of the manufacturing process may be improved. For example, an extruded product having a thickness in the height direction of between 3 mm to 5 mm may be produced by providing a thickness of the forming section of 5 mm in the height direction. In addition, the thickness of the extruded product may be controlled by the extrusion line speed. The thickness of the extruded product may be further controlled by adjusting the passage area of the die gap (i.e. the outlet of the die). In particular, with the latter regulation, the thickness of the top layer and the bottom layer of the extruded product may be controlled by operating the die lips (e.g. by moving the lips towards each other or by moving the lips away from each other). Moreover, it was found that an extension of each forming section in the height direction of 4.7 mm is advantageous for providing a good process stability. Alternatively, the forming section may have an extension in the height direction of 2.7 mm. Especially, for thin extruded products. Moreover, the die gap may be limited in the width direction by a motorized side deckling system. Therefore, an operator may easily define the desired width of the extruded product in the width direction.

The mounting section may be a portion of the forming element with which the forming element may be mounted to the main body. The mounting section may be positioned at an upstream side with respect to the forming section. Further, the mounting section may be received by a recess of the main body so as to be accommodated within the main body. Therefore, the mounting section may not negatively influence the forming process (e.g. by protruding into the flow passage). The mounting section may define the gap between adjacent forming sections. That is, the mounting section may have a larger extension in the width direction as compared to the forming section. Accordingly, there may not be any spacer necessary to provide the gap between adjacent forming sections. However, in order to adjust the gap between adjacent forming sections, spacer may be provided. Further, at least some of the mounting sections may be connected to each other. In this case, a plurality of forming sections may be provided on an integrally formed mounting section so as to form a connected set of forming elements (e.g. a so-called teeth comb or forming elements comb). Accordingly, the exchange of forming elements may be particularly easy and fast because with one operation a plurality of forming elements may be demounted and/or mounted to the main body so as to adapt the extrusion system to a new product to be extruded. Preferably, five sets of forming elements may be provided each having a length in the width direction of about 300 mm, for example.

The mounted state may refer to a state in which the forming elements are mounted to the main body. In the mounted state, a flow passage for molten material may be formed by the guiding unit (i.e. by the main body and the forming elements) and the die.

Separate elements may mean that the forming elements and the main body may be separated from each other in a non-destructive manner. In the separated state, there may be no connection between the forming elements and the main body. Further, the separating of the forming elements and the main body may be reversible such that the forming elements may be again be mounted to the main body. Preferably, the forming elements may be mounted and demounted to the main body several times without difficulty. Accordingly, the guiding unit may be variably adapted to different demands.

Preferably, each forming element includes an air passage configured to output air at a tip end of each forming element

The tip end may be the end of the forming section at the downstream side of the forming element. That is, the tip end of the forming section may be the end of the forming element in the extrusion direction. Accordingly, air may be blown into the just formed extruded product. In particular, the air may be blown into the channels formed within the extruded product. In other words, air may be blown into the extruded product between the top layer, the bottom layer and the ribs. As a result, the channels may not collapse once outputted out of the die. The air may be pressurized air. That is, the air may have a pressure higher than the ambient pressure so as to prevent collapsing of the channels.

The air may be guided through a main body air passage formed within the main body. From the main body, the air may be introduced into a forming element air passage. The forming element air passage may be open at the mounting section so as to be in communication with the main body air passage in a mounted state, and at the tip end of the forming section. Further, a seal may be provided at the mounting section so as to seal the air passage from the flow passage inside of the die. Accordingly, a leakage of molten material into the air passage and a leakage of air into the molten material may be avoided. Additionally or alternatively, the mounting section and the corresponding part of the main body at which mounting section may be mountable, may be processed in a highly accurate manner so as to have only small tolerances.

Preferably, the main body has a recess, preferably an undercut, most preferably a T-shaped undercut, for holding at least one forming element via the mounting section such that the at least at least one forming element is mounted to the main body in a positive locking manner.

The main body may have the recess at its downstream side such that the forming element may protrude in the extrusion direction in a mounted state. That is, the recess may be provided at a tip end of the main body. The recess may be straight in the width direction. The forming element may be slid into the recess, preferably from the width direction. In particular, the mounting section of the forming element may be completely received by the recess such that the molten material may not come in contact with the mounting section. Accordingly, mounting section is not deteriorated by the molten material such that mounting and demounting of the forming element may be readily possible. For example, the forming element may be held within the recess by a clip mechanism. Alternatively or additionally, the forming element may be held within the recess by a screw. Further, the recess may be configured to hold the forming element in a predefined manner. That is, the recess may be used for appropriately positioning the forming element. Accordingly, it may be ensured that the forming element is in the correct position within the male of the extrusion die.

Further, the recess may have an undercut so as to hold the mounting section of the forming element in a positive locking manner (i.e. by engagement). In this case no additional mounting means may be necessary. Thus, the mounting of the forming element to the main body may be facilitated. In more detail, the forming element may be slid into the recess from one and/or both sides in the width direction. For example, the forming elements and/or spacer may be subsequently inserted into the recess so as to provide the plurality of forming elements in the desired pattern. Further, sets of several forming elements may be inserted into the recess. The undercut may have a L-shape in the cross section defined by the extrusion direction and the height direction. Further, the main body may have a closure configured to close and to open the recess in the width direction. Accordingly, the closure may prevent the forming element from falling out of the recess. Further, the closure may be configured to apply a pressure in the width direction onto the forming elements held by the recess so as to ensure a proper fit of the forming element and to reduce backlash. Preferably, the recess may be closed at one side in the width direction and at the other side the closure may be provided. Accordingly, the male of the die may be operatable from one side. Alternatively, the main body may have two closures, one at each side in the width direction. Accordingly, the forming elements may be quickly mounted and demounted from both side so as to adapt the guiding unit to a new pattern of forming elements.

The T-shaped undercut may be formed symmetrically with respect to an axis extending in the extrusion direction. Accordingly, the forming element may be properly held by the recess such that the forming element is not deviated even if high loads are applied thereon (e.g. high pressure of up to 250 bar within the die). In addition, due to the optional symmetrical configuration of the T-shaped recess, the occurrence of stress peaks within material adjacent to the connection between the forming element and the main body may be avoided. Thus, the durability of the guiding unit may be improved and damages may be avoided.

Further, a ratio of the extension of the mounting section and the extension of the forming section in the extrusion direction may be between 0.5 to 1.5, preferably between 0.8 to 0.2, most preferably between 0.9 to 1.1. In the first ratio the guiding unit may be easily manufactured and adaptable to a wide range of products to be extruded. In the second ratio, the guiding unit may be implemented in high pressure applications. That is, the forming element may be still held in place even if the molten material is processed having high pressure. The third ratio may provide the effect that even very thin extruded products may be manufactured. That is, the forming element may be properly held in place while the main body may be efficiently realized (i.e. no excessively deep recess).

Preferably, at least some of the forming elements are mounted via the mounting section to the main body by screwing.

Alternatively or additionally, the forming elements may be mounted to the main body by screws. Accordingly, the forming elements may be individually mounted to the main body. On the other hand, in case the L-shaped or T-shaped recess is provided, all forming elements have to be demounted from the main body that are provided between a forming element to be demounted and an opening of the recess. Therefore, by individually mounting the forming elements by screw to the main body, even individual forming elements among the plurality of forming element may be readily demounted from the main body.

Preferably, at least one forming section has a circular shape in a cross-section perpendicular to the extrusion direction.

Conventionally, it was not possible to manufacture a die having cylindrical forming elements using machining processes like milling and cutting due to spatial limitations by manufacturing the one-piece vane. That is, the small space between the adjacent forming elements and the relatively large integral vane prevents the manufacturing of cylindrical forming elements with traditional machining processes in an economic manner.

This is different in the present invention. In more detail, the forming elements may be demountable from the main body. Therefore, the forming elements may be manufactured separately from the main body. In addition, each forming element may be separately manufactured. As a result, there are no limitations in the manufacturing of the forming elements caused by other elements being an obstacle and/or due to a large unit to be handled (e.g. by a CNC-machine). Accordingly, even circular shapes of the forming elements may be possible to manufacture in a highly efficient and economic manner. Therefore, by separately manufacturing the forming elements a plurality of differently shaped forming sections may be provided. Then, by mounting different forming elements to the main body, guiding units with a large variety of possible pattern may be attained.

Preferably, the forming elements are arranged in a row at the main body.

The row of forming elements may extend in the width direction. The forming elements provided in the row may have the same distance to each other (i.e. the gap between adjacent forming sections may be constant throughout the row). Accordingly, an extruded product may have evenly distributed channels. Alternatively, the distances between the forming elements may vary. Therefore, the extruded product may be extruded having different shapes by only mounting the forming elements in another pattern or by mounting different forming elements to the main body. Thus, the extruded product may have individual properties adapted to the specific field of application of the extruded product. Preferably, the forming elements may be freely combined and easily rearranged due to the possibility of demounting the forming elements from the main body.

Preferably, the forming elements are arranged in at least two rows at the main body, wherein the rows extending substantially parallel to each other.

That is, there may be provided a second row of forming element adjacent to the first row in the height direction. Accordingly, the extruded product may have an intermediate layer in addition to the bottom layer and the top layer. The second row may be the same as the first row (i.e. may have the same pattern of forming elements). Accordingly, the extruded product may have a constant cross section. Alternatively, the second row may differ from the first row. In this case, the extruded product may have specific properties on either side of the extruded product. The rows may differ from each other by the pattern in which different forming elements a provided. In addition, there may be provided more rows (e.g. 3, 4, 5 etc.).

Preferably, the forming sections substantially extend in the extrusion direction.

The forming elements may protrude from the main body or from the mounting section in the extrusion direction. Accordingly, the forming sections may form a part of the boundary of the flow passage for the molten material. Further, the forming sections may extend up to the outlet of the die where the extruded product is outputted out of the die. That is, the forming sections extend throughout the outlet region. The tip end of the forming element may be flush to the outer surface of the die. Accordingly, it could be ensured that the molten material is sufficiently guided by the forming element up to the outlet gap of the die.

Preferably, a ratio of the protrusion amount of each forming section from the main body and the extension of each forming section perpendicular to the extrusion direction is between 0.5 to 5.0, preferably between 1.0 to 4.0, more preferably between 2.5 to 3.0.

The protrusion of the forming element from the main body may correspond to the protrusion of the forming section from the main body since the mounting section may be received by the main body. That is, the ratio of the length of the forming section in the extrusion direction and the thickness of the forming section in the height direction may be important for creating the channels within the extruded product. The thickness of the forming section may be responsible for the inner dimension of the channel within the extruded product. The length of the forming section may be passed by the molten material and used to push the molten material in the desired shape. While passing the forming section, the molten material may be cooled so as to be more solidified. Accordingly, the channels defined by the forming elements may be sufficiently resilient so as to maintain the shape given by the forming element. In the first above range, circular and/or polygonal shapes of the channels within the extruded product may be smoothly created. In the second above range, even irregular arranged forming elements may yield in an extruded product having a homogeneous material distribution. Thus, the mechanical properties of the extruded product may be improved. In the third above range, even relatively thin extruded products (i.e. having a small extension in the height direction) may be manufactured. That is, the extruded products may have a thickness in the height direction smaller than 5 mm. In addition, the feed of the extrusion line may be sufficiently high so as to provide a highly efficient manufacturing process.

Preferably, at least two mounting sections of at least two forming elements are connected to each other.

That is, a plurality of forming elements may be connected to each other via their mounting sections. In other words, the mounting section of several mounting elements may form a bar on which the forming sections may be provided. Therefore, each forming section may have a smaller extension in the width direction as compared to the mounting section. Accordingly, a set of forming elements may be mounted or demounted from the main body in one process step. Therefore, the exchange or rearrangement of forming elements may be facilitated and accelerated. Further, all forming elements may be connected to each other via their mounting sections. Such predefined set of forming elements may be easily and quickly mounted to the main body so as to provide a guiding unit for manufacturing different extruded products. Accordingly, even unskilled worker may exchange the forming elements. In addition, a manufacturer of extruded products may be supplied with previously investigated and tested forming elements (e.g. provided in sets of forming element connected by their mounting sections) so as to be in a position to manufacture a wide range of high-quality extruded products without the need for buying a new guiding unit or die for each different product.

According to a further aspect of the present invention a polymer extrusion die for creating an extruded product from molten material is provided, wherein the extruded product has a plurality of hollow channels, the die comprising:
a housing, having a cavity, and
the above defined guiding unit arranged within the cavity such that the guiding unit is passed by the molten material,
wherein the housing has an inlet for introducing the molten material into the cavity, and an outlet defining an outlet region and for outputting the extruded product in an extrusion direction, and
wherein the guiding unit is arranged within the cavity such that the forming sections are at least partly arranged within the outlet region.

The outlet may be defined between two outlet portions of the housing which may be positioned so as to be facing each other in the height direction. These outlet portions may be the die lips. Between the die lips an outlet of the die may be defined. The outlet of the die may be referred to as the die gap. Between the die lips the outlet region of the die may be defined. The die lips may define a flow passage for the molten material. Further, the die lips may be substantially parallel to each other. The forming section of the forming elements may extend into the outlet region. Preferably, the forming sections extends throughout the outlet region. Thus, the channels within the extruded product may be sufficiently formed by the die because the molten material is pushed in the desired thickness by the die lips and is at the same time provided with the desired shape and arrangement of the channels by the forming elements. Within the extrusion die there may be a pressure between 50 and 250 bars depending on material melt flow index, line speed, extruder rpm, etc.

Preferably, the passage area of the outlet region is adjustable.

The area of the flow passage within the outlet region may be dependent on the distance (i.e. the clearance) between die lips that determine the outlet portions of the housing. The distance of the die lips in the height direction may be adjusted by pushing both die lips towards each other. This may be realized by threaded rods pushing the die lips towards each other. The thickness of the extruded product in the height direction may depend on the feed of molten material into the die and the flow passage defined provided in the outlet region. The outlet region may also refer to as die gap.

According to a further aspect of the present invention an extrusion system is provided, comprising:
a support supporting the polymer extrusion die according to claim 11 or 12,
   and
a supply system configured to heat plastic material so as to obtain molten material and to supply the molten material to the die.

The extrusion system may further comprise a feeding system. The feeding system may be configured to blend different material components (e.g. polypropylene, mineral filler and/or master batch) in compound granules or flakes by separately sucking them from silos or big bags or local bins. Each component may be metered into an individual weight hopper which may precisely measure and control its rate. Then, the raw material may be introduced into an extruder (extrusion worm gear). Subsequently, the raw material may be mixed and molten while being transferred through the extruder. Then, the molten material may be introduced into a filtering means. Within the filtering means the molten material may be filtered and subsequently introduced into a dosing gear pump. Within the dosing gear pump the molted material may be metered and further mixed so as to attain a good homogenization of the molten material. Subsequently, the molten material may be introduced into the extrusion die via the inlet of the housing.

According to a further aspect of the present invention there is provided a method of manufacturing the above defined guiding unit, wherein the method comprises the steps of:
removal of material from a blank so as to form the forming elements, and
mounting the forming elements to the main body.

That is, the forming elements may be separately manufactured from the main body. Accordingly, there may be no limitations in manufacturing the forming elements. As a result, chipping manufacturing (i.e. removal of material from a blank) and electrical discharge machining may be possible. Thus, the forming elements may be economically manufactured even if the forming sections of the forming elements are small in the height direction (for example, 2 mm to 5 mm) and/or are arranged close to adjacent forming sections (e.g. in case the forming elements are connected with their mounting sections). In addition, by separately manufacturing the forming elements even rounded or circular forming elements may be readily manufactured. Accordingly, a wide range of differently formed forming elements may be available.

Preferably, the method further comprising the step of drilling a through hole into the forming elements so as to form air passages.

Accordingly, an air passage may be provided in each forming element so as to introduce air into the created channel.

Individual features of the above defined embodiments may be rearranged or exchanged with other features so as to form new embodiments. All advantages and modification of said features are analogously applicable to the new embodiments.

In the following the present invention will be explained in detail with reference to the enclosed figures. However, the detailed explanation of embodiments is provided for better understanding and is not intended to limit the scope of the present invention to the embodiments described in the following.
**Fig. 1** is a perspective view of a guiding unit according to an embodiment of the present invention.
**Fig. 2** is a perspective view of a forming element according to an embodiment of the present invention.
**Fig. 3** is a perspective view of a guiding unit according to an embodiment of the present invention.
**Fig. 4** is a side view of the guiding unit according to the embodiment of the present invention.
**Fig. 5** is a front view of the guiding unit according to the embodiment of the present invention.
**Fig. 6A** is a schematical side view of the guiding unit according to the embodiment of the present invention.
**Fig. 6B** is a schematical side view of the guiding unit according to the embodiment of the present invention.
**Fig. 7** is a side view of an extrusion die according to an embodiment of the present invention.
**Fig. 8** is a perspective view of a guiding unit according to an embodiment of the present invention.
**Fig. 9** is a perspective view of a guiding unit according to an embodiment of the present invention.

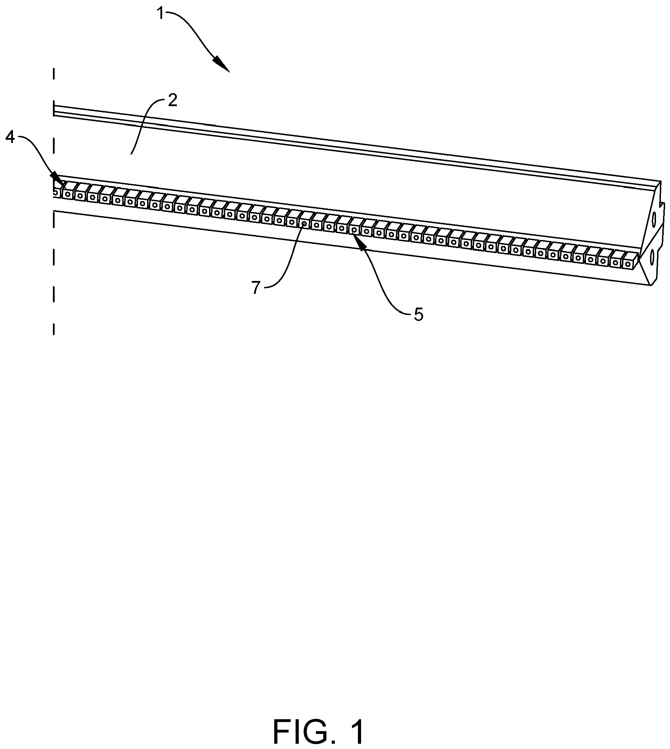

**Fig. 1** is a schematical and perspective view of a guiding unit 1 according to an embodiment of the present invention. The guiding unit 1 comprises a main body 2 having a substantially triangular shape in a cross section defined by the extrusion direction d1 and the height direction d3. The main body 2 is configured to be provided within an extrusion die 10 (not depicted in Fig. 1). Further, in operation, the main body 2 may be surrounded by molten material. That is, the main body 2 may guide the molten material by at least a part of its outer surface. In other words, the main body 2 may form a passage for the molten material between its outer surface and the die 10. At the main body 2 a plurality of forming elements 4 are mounted. Each forming element 2 has a forming section 5 which is configured to further guide and form the molten material previously guided by the main body 2. In particular, the forming elements 4 of the present embodiment are configured to form rectangular hollow channels into an extruded product. Further, each forming element 4 has an air passage 7. The air passage 7 is open at a tip end of the forming element 4. Accordingly, air may be introduced into the extruded product. In particular, the air is introduced into the channels created by the forming element 4. Thus, a collapse of the channels may be avoided once the extruded product left the die 10.

Moreover, the forming elements 4 may be demountable from the main body 2 in a non-destructive manner. That is, the forming elements 4 may be removed from the main body 2 and may be again attached to the main body 2.

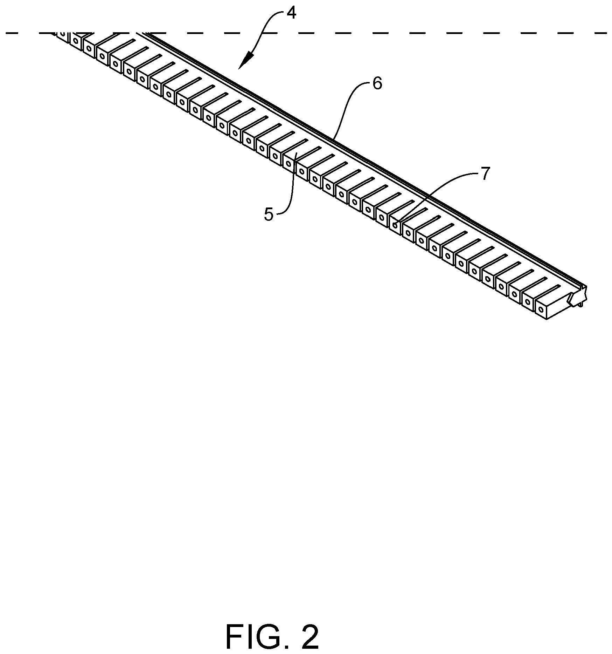

**Fig. 2** is a schematical and perspective view of the forming elements 4 according to an embodiment of the present invention. In Fig. 2 the forming elements 4 are demounted from the main body 2. Further, the forming elements 4 have the forming section 5 and a mounting section 6. The forming section 5 is in contact with the molten material in operation, and is responsible for the shape of the hollow channels within an extruded product. The mounting section 6 is configured to be directly in contact with the main body 2 so as to mount the forming elements 4 to the main body 2. In the present embodiment, the mounting section 6 is T-shaped so as to be inserted into a corresponding recess 8 at the main body 2. The mounting section is received by the recess 8 of the main body 2 (see Fig. 1). Therefore, the forming elements 4 are mounted to the main body 2 via the mounting section 6 in a positive locking manner. The tolerances of the mounting section 6 and the recess 8 are designed such that in operation there is no leakage of molten material. Further, in Fig. 2 the air passages 7 are depicted. The air transferred by the air passages 7 is supplied from the main body 2 via the mounting section 6 to the tip end of the forming section 5. Further, in the present embodiment, the forming elements 4 are connected via their mounting sections 6. In other words, the mounting sections form an elongated bar in the width direction which is configured to be mounted to the main body 2. In the present embodiment, the forming sections 5 and the mounting sections are integrally formed. In another embodiment not depicted in the figures, the forming sections 5 and the mounting sections 6 are separate elements which may be attached to each other by screwing, for example.

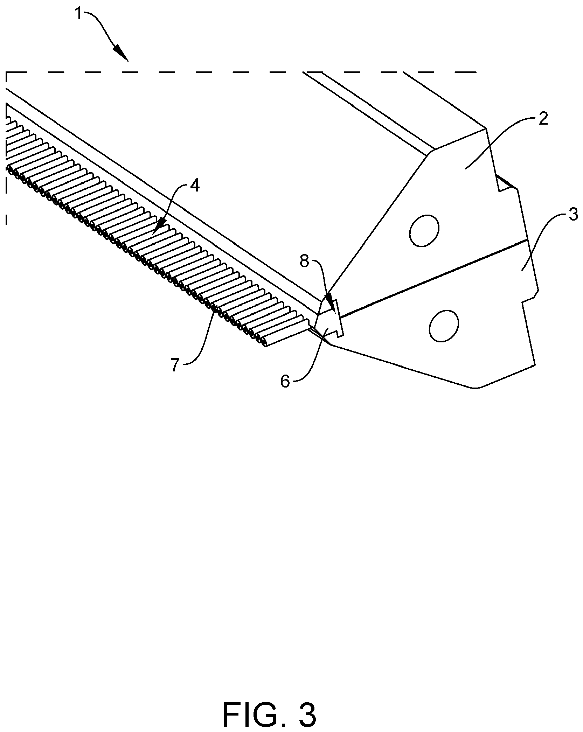

**Fig. 3** is a schematical and perspective view of a guiding unit 1 according to a further embodiment of the present invention. The present embodiment differs from the above outlined embodiment in that the forming elements 4 have a forming section that is circular in a cross section defined by the height direction d3 and the width direction d2. Accordingly, the guiding unit 1 of the present embodiment forms circular channels into the extruded product. Further, in Fig. 3 the mounting portion 3 of the main body 2 is depicted. The mounting portion 3 is configured to be mounted to the die 10 such that the guiding unit is appropriately held within the die 10. In the present embodiment, the mounting portion 3 is a protrusion which may be accommodated in a corresponding recess provided at the die 10. As a result, the guiding unit is correctly positioned within the die 10. Further, the guiding unit is fixed to the die 10 by screws.

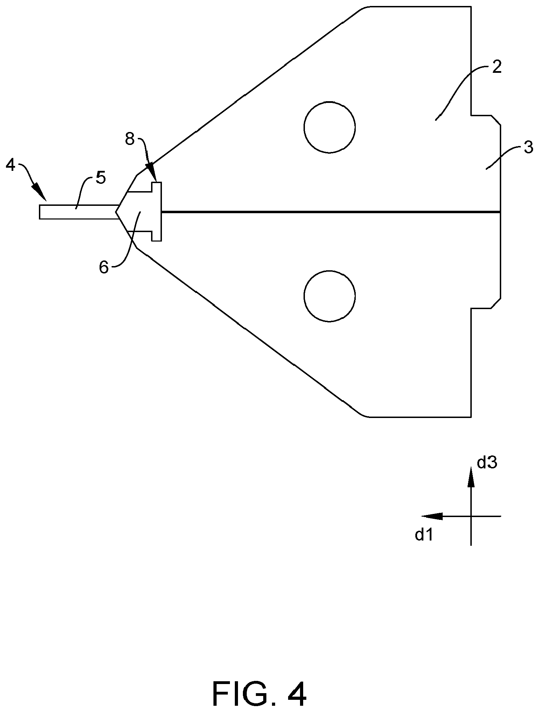

**Fig. 4** is a side view of the guiding unit according to the embodiment of the present invention and depicted in Fig. 3. In Fig. 4 the mounting section 6 having the T-shaped contour is depicted. Accordingly, the forming elements 4 may be slid into the main body 2 from one side in the width direction d2. Further, a coordinate system is depicted in Fig. 4 for defining the extrusion direction d1 and the height direction d3. In operation, the molten material flows from the upstream side (the right side in Fig. 4) to the downstream side (the left side in Fig. 4).

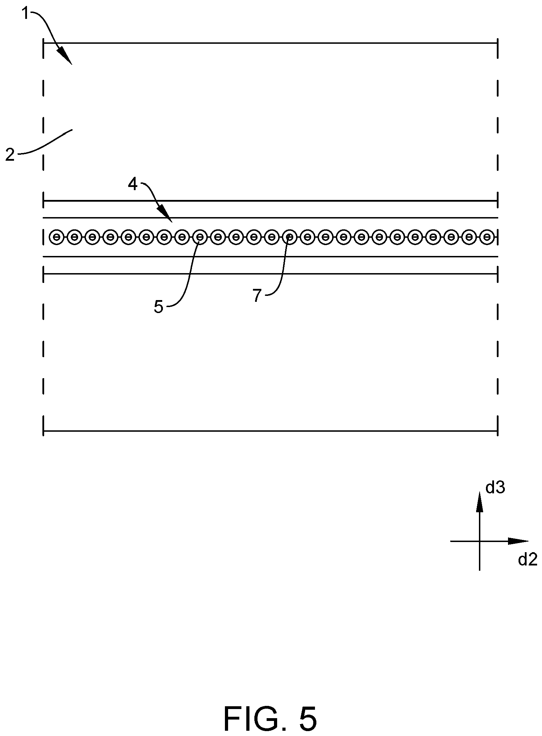

**Fig. 5** is a front view of the guiding unit 1 according to the embodiment depicted in Fig. 4. In Fig. 5 the air passages 7 are depicted that are open at the tip end of each forming element 5. Further, a coordinate system is depicted in Fig. 5 for defining the height direction d3 and the width direction d2.

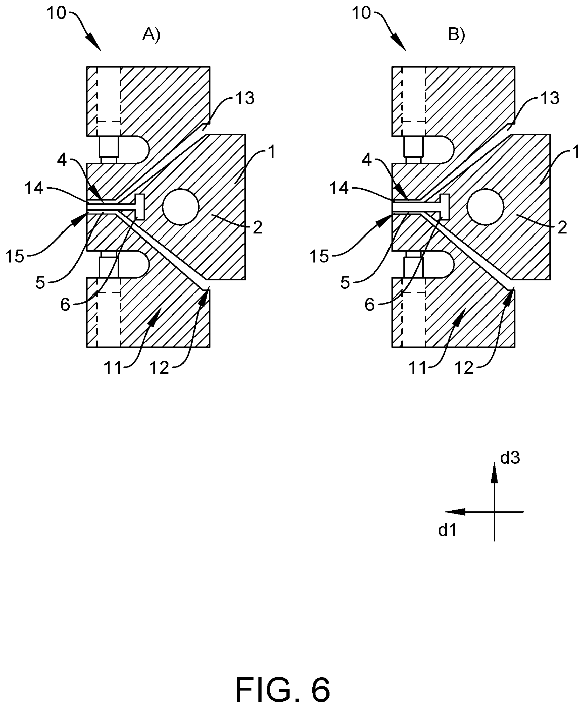

**Fig. 6A** and **Fig. 6B** are schematical side views of the guiding unit 1 according to embodiments of the present invention. In figures 6A and 6B there is depicted the die 10 which accommodates the guiding unit 1. The die 10 has a housing, delimited inter alia by two die lips 11, which forms a cavity 12. Within the cavity 12, the guiding unit 1 is accommodated and fixed via the mounting portion 3 (not depicted in figures 6). In addition, the die 10 has an inlet 13 for introducing molten material into the cavity 14 and an outlet 14 for outputting the extruded product.

In Fig. 6A the guiding unit 1 is provided with forming elements 4 each having a forming section 5 that has an extension in the height direction d3 of about 4.7 mm. In Fig. 6B the same guiding unit 1 is provided with forming elements 4 each having a forming section 5 that has an extension in the height direction d3 of about 2.7 mm. That is, only the forming elements 4 are exchanged while the same main body may be used. It is not even necessary to demount the main body from the die 10 in order to exchange the forming elements.

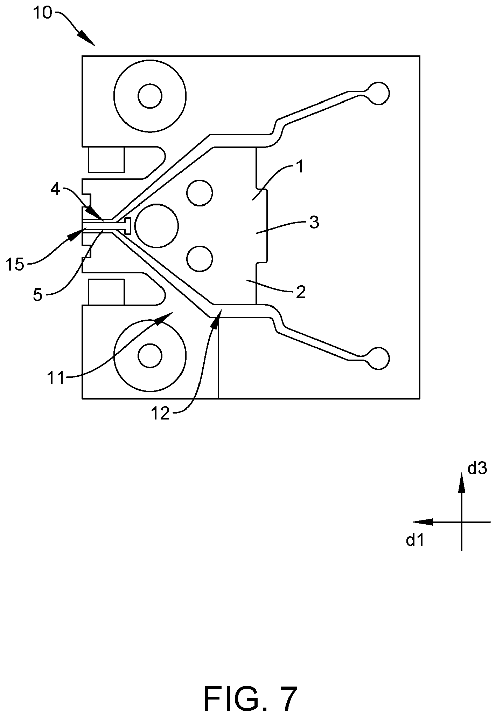

**Fig. 7** is a side view of an extrusion die 10 according to an embodiment of the present invention. The die 10 is composed of several individual pieces. Therefore, the die 10 may be assembled successively. In Fig. 7 the outlet region 15 is depicted. The outlet region 15 is the region of the die 10 that is passed by the molten material last before the extruded product left the die 10. The outlet region 15 is formed by two outlet portions of the housing 11 (i.e. the die lips) being opposite to each other. The both die lips may be essentially parallel to each other such that the outlet region has a constant passage area in the extrusion direction d1. Further, the die lips may be pushed towards each other by threaded rods so as to adjust the width of the outlet region in the height direction d3. Accordingly the thickness of the extruded product in the height direction may be adjusted. In addition, in the present embodiment the forming elements 4 extend throughout the outlet region 15. As a result, the sufficient creation of the hollow channels within the extruded product may be ensured.

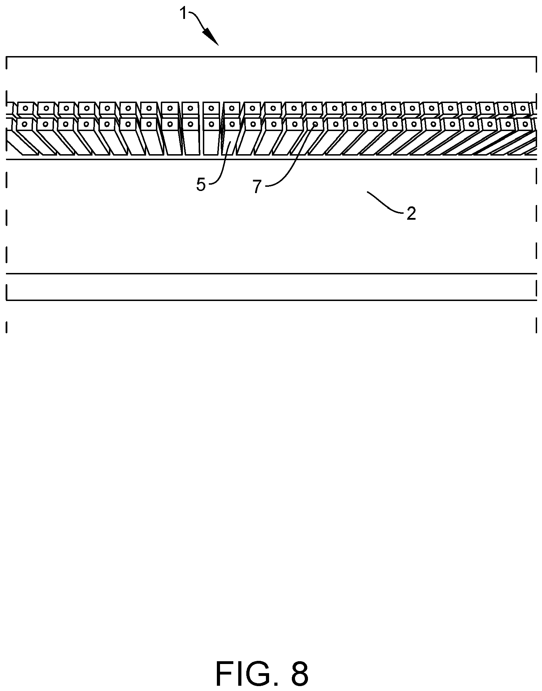

**Fig. 8** is a perspective view of a guiding unit 1 according to a further embodiment of the present invention. The guiding unit 1 of the present embodiment differs from the guiding unit of the previously described guiding units 1 in that two rows of forming elements 4 are provided in the height direction d3. Accordingly, an extruded product may be extruded that has two parallel rows of hollow channels. Further, the rows are parallel to each other and extend in the width direction d2.

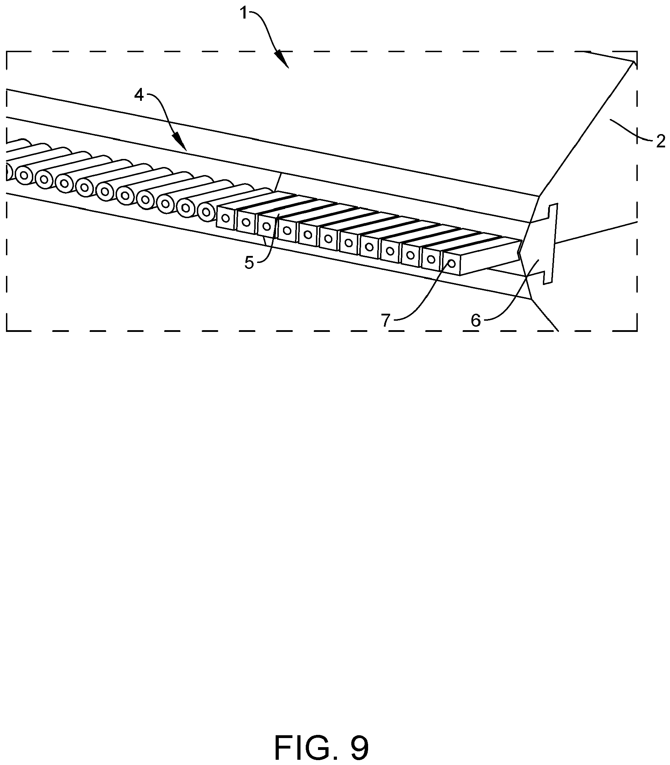

**Fig. 9** is a perspective view of a guiding unit 1 according to an embodiment of the present invention. The present embodiment differs from the embodiment depicted in Fig. 1 in that forming elements 4 are provided at the main body 2 having different forming sections 5. That is, a set of forming elements 4 has a polygonal cross section, wherein another set of forming elements 4 has forming sections having a circular cross section. Accordingly, an extruded product may be manufactured having differently shaped cross sections. In the present embodiment the forming elements 4 having the same forming sections 5 are connected to each other via their mounting sections 6.

### Reference sign list

- 1: guiding unit
- 2: main body
- 3: mounting portion
- 4: forming element
- 5: forming section
- 6: mounting section
- 7: air passage
- 8: recess
- 10: extrusion die
- 11: housing
- 12: cavity
- 13: inlet
- 14: outlet
- 15: outlet region
- d1: extrusion direction
- d2: width direction
- d3: height direction

## Claims

1. A guiding unit (1) for a polymer extrusion die (10) for creating an extruded product from molten material, wherein the extruded product has a plurality of hollow channels and is extruded in an extrusion direction (d1),
the guiding unit (1) comprising:
a main body (2) having a mounting portion (3) for mounting the guiding unit (1) inside the die (10), and
a plurality of forming elements (4) each comprising a forming section (5) and
a mounting section (6), wherein the forming elements (4) are mounted or mountable via the mounting sections (6) to the main body (2),
wherein in the mounted state the forming sections (6) protrude from the main body (2),
wherein each forming section (6) has an outer geometrical configuration substantially corresponding to the inner cross-sectional shape of the channels of the extruded product, and
wherein the forming elements (4) and the main body (2) are separate elements such that the forming elements (4) are demountable from the main body (2).

2. Guiding unit according to claim 1, wherein each forming element includes an air passage (7) configured to output air at a tip end of each forming element (4).

3. Guiding unit (1) according to any one of the preceding claims, wherein the main body (2) has a recess (8), preferably an undercut, most preferably a T-shaped undercut, for holding at least one forming element (4) via the mounting section (6) such that the at least one forming element (4) is mounted to the main body (2) in a positive locking manner.

4. Guiding unit (1) according to any one of the preceding claims, wherein at least some of the forming elements (4) are mounted via the mounting section (6) to the main body (2) by screwing.

5. Guiding unit (1) according to any one of the preceding claims, wherein at least one forming section (5) has a circular shape in a cross-section perpendicular to the extrusion direction (d1).

6. Guiding unit (1) according to any one of the preceding claims, wherein the forming elements (4) are arranged in a row at the main body (2).

7. Guiding unit (1) according to any one of the preceding claims, wherein the forming elements (4) are arranged in at least two rows at the main body (2), wherein the rows extending substantially parallel to each other.

8. Guiding unit (1) according to any one of the preceding claims, wherein the forming sections (4) substantially extend in the extrusion direction (d1).

9. Guiding unit (1) according to any one of the preceding claims, wherein a ratio of the protrusion amount of each forming section (5) from the main body (2) and the extension of each forming section (5) perpendicular to the extrusion direction (d1) is between 0.5 to 5.0, preferably between 1.0 to 4.0, more preferably between 2.5 to 3.0.

10. Guiding unit (1) according to any one of the preceding claims,
wherein at least two mounting sections (6) of at least two forming elements (4) are connected to each other.

11. A polymer extrusion die (10) for creating an extruded product from molten material, wherein the extruded product has a plurality of hollow channels, the die comprising:
a housing (11) having a cavity (12), and
the guiding unit (1) according to any one of the preceding claims arranged within the cavity (12) such that the guiding unit (1) is passed by the molten material,
wherein the housing (11) has an inlet (13) for introducing the molten material into the cavity (12), and an outlet (14) defining an outlet region (15) and for outputting the extruded product in an extrusion direction (d1), and
wherein the guiding unit (1) is arranged within the cavity (12) such that the forming sections (4) are at least partly arranged within the outlet region (15).

12. Die (10) according to claim 11, wherein the passage area of the outlet region (15) is adjustable.

13. Extrusion system comprising:
a support supporting the polymer extrusion die (10) according to claim 11 or 12, and
a supply system configured to heat plastic material so as to obtain molten material and to supply the molten material to the die (10).

14. Method of manufacturing the guiding unit (1) according to any one of claims 1 to 10, wherein the method comprises the steps of:
removal of material from a blank so as to form the forming elements (4), and
mounting the forming elements (4) to the main body (2).

15. Method according to claim 14 further comprising the step of drilling a through hole into the forming elements (4) so as to form air passages (7).
